# EUROPÄISCHE PATENTANMELDUNG

(11) **EP 4 534 475 A1**
(43) Veröffentlichungstag der Anmeldung: **09.04.2025**
(21) Anmeldenummer: 23020456.2
(22) Anmeldetag: 02.10.2023
(51) Int. Cl.: C01B 3/04

(54) **VERFAHREN UND ANLAGE ZUR GEWINNUNG EINES WASSERSTOFFS ENTHALTENDEN PRODUKTS UNTER VERWENDUNG VON AMMONIAK**

(71) Anmelder: Linde GmbH, 82049 Pullach (DE)
(72) Erfinder: Peschel, Andreas, 82049 Pullach (DE); Reinke, Michael, 82049 Pullach (DE)
(74) Vertreter: Fischer, Werner

(57) **Zusammenfassung**

Verfahren in Anlage zur Gewinnung eines Wasserstoff enthaltenden Produkts (7), bei dem ein flüssig bereitgestellter Ammoniakeinsatz (1) verdampft und überhitzt wird, um einen überhitzten Ammoniakeinsatz (4) zu erhalten, der in einem Spaltreaktor (S) mit katalytischer Unterstützung zu einem weitgehend aus Ammoniak, Wasserstoff und Stickstoff bestehenden Spaltgas (5) umgesetzt wird, das nach seiner Abkühlung zu dem Wasserstoff enthaltenden Produkt (7) aufbereitet wird. Kennzeichnend hierbei ist, dass die Ammoniakspaltung bei einer Temperatur von weniger als 700°C durchgeführt und der verdampften Ammoniakeinsatz (3) in einem rekuperativ betriebenen Wärmetauscher (Feed-Effluent-Wärmetauscher) (W) gegen zumindest einen Teil des Spaltgases (5) überhitzt wird.

## Beschreibung

Die Erfindung betrifft ein Verfahren und eine Anlage zur Gewinnung eines Wasserstoff enthaltenden Produkts, bei dem ein flüssig bereitgestellter Ammoniakeinsatz verdampft und überhitzt wird, um einen überhitzen Ammoniakeinsatz zu erhalten, der in einem Spaltreaktor mit katalytischer Unterstützung zu einem weitgehend aus Ammoniak, Wasserstoff und Stickstoff bestehenden Spaltgas umgesetzt wird, das nach seiner Abkühlung zu dem Wasserstoff enthaltenden Produkt aufbereitet wird.

### Hintergrund der Erfindung

Die katalytisch unterstütze thermische Spaltung von Ammoniak ist bekannt und seit vielen Jahren Stand der Technik. Die dabei ablaufende Reaktion

2NH₃ ↔ N₂ + 3H₂

ist endotherm (ΔH=46,2kJ/mol). Die von dem eingesetzten Katalysatormaterial abhängige Lage des Reaktionsgleichgewichts verschiebt sich mit fallendem Druck und steigender Temperatur zur Produktseite.

Aus dem bei der Ammoniakspaltung erhaltenen Spaltgas, das weitgehend aus Wasserstoff und Stickstoff sowie nicht umgesetztem Ammoniak besteht, kann ein Wasserstoff-Stickstoff-Gemisch (sog. Formiergas) oder reiner Wasserstoff als Produkt erzeugt werden. Auch eine weitere Nutzung des Wasserstoffs bzw. Wasserstoff-Stickstoff-Gemischs, beispielsweise in einer Gasturbine, die mit einem Generator gekoppelt ist, kann erfolgen. In allen Fällen, die jeweils Ausgestaltungen der Erfindung entsprechen, wird also Wasserstoff aus Ammoniak gewonnen. Die Gewinnung eines Wasserstoff enthaltenden Produkts in dem hier verstandenen Sinn schließt also die Gewinnung eines wasserstoffhaltigen Gasgemischs, weiterer Produkte wie Stickstoff und/oder eine anschließende Nutzung des Produkts nicht aus.

Unterschiedliche Verfahrenskonzepte der gattungsgemäßen Art sind aus der Patentund Nichtpatentliteratur bekannt. Als Beispiel sei hier D. Sima et al., Int. J. Hydrogen Energy 45 (2020) 9342-9352 angeführt.

Zur Durchführung derartiger Verfahren geeignete Vorrichtungen können neben einem Spaltreaktor (auch als Ammoniakcracker bezeichnet) einen Druckwechseladsorber zur Wasserstoffreinigung umfassen. Beispielsweise sei in diesem Zusammenhang auf die EP4112539A1 und die EP4112540A1 verwiesen, deren Inhalte hier in vollem Umfang aufgenommen werden.

Zur industriellen Ammoniakspaltung können ähnliche Anlagen eingesetzt werden, wie sie heute zur großtechnischen Synthesegaserzeugung durch Dampfreformierung von Kohlenwasserstoffen verwendet werden. Derartige Anlagen umfassen einen Spaltreaktor mit einem Feuerraum, in dem mit Katalysatormaterial gefüllte Spaltrohre angeordnet sind, sowie ein Abhitzesystem. Der Feuerraum wird durch einen oder mehrere, mit einem Brennstoff betriebene Brenner beheizt, die Wärme für die endotherm ablaufende Spaltung des durch die Spaltrohre geführten Ammoniaks liefern.

Ammoniakcracker werden gewöhnlich unter Einsatz nickelbasierter Katalysatoren bei hohen Spalttemperaturen von mehr als 800°C betrieben, wobei das Spaltgas mit einer nur wenig geringeren Temperatur erhalten wird. Zur Gewinnung des Wasserstoff enthaltenden Produkts muss das Spaltgas abgekühlt werden, was aus wirtschaftlichen Gründen gegen einen im Prozess anzuwärmenden Stoffstrom erfolgen sollte. Nach dem Stand der Technik wird das heiße Spaltgas zur Verdampfung des flüssigen Ammoniakeinsatzes eingesetzt, was allerdings mit erheblichen Exergieverlusten verbunden ist.

Mit deutlich weniger Exergieverlusten verbunden und daher wirtschaftlicher wäre es, die Hochtemperaturwärme des Spaltgases zur Überhitzung des verdampften Ammoniakeinsatzes zu verwenden. Um die Spaltgaskühlung auf diese Weise durchzuführen, bietet sich der Einsatz eines rekuperativen Wärmetauschers an, der aufgrund seiner kontinuierlichen Betriebsweise eine einfache Verfahrensführung erlaubt und über den Wärme mit hohem Wirkungsgrad übertagen werden kann. Nachteilig bei einem solchen, in Fachkreisen als Feed-Effluent-Wärmetauscher bekannten und beispielsweise in der US20180023897A1 beschrieben Apparat ist allerdings, dass er aus sehr hochwertigen und teuren Materialien gefertigt sein muss, um den hohen Spaltgastemperaturen dauerhaft zu widerstehen.

Die vorliegende Erfindung stellt sich die Aufgabe, ein Verfahren und Anlagen der gattungsgemäßen Art bereitzustellen, mit denen es möglich ist, die im Spaltgas enthaltene Wärme effektiv und wirtschaftlich im Prozess zu nutzen.

### Offenbarung der Erfindung

Die gestellte Aufgabe wird verfahrensseitig erfindungsgemäß dadurch gelöst, dass die Ammoniakspaltung bei einer Temperatur von weniger als 700°C durchgeführt und der verdampfte Ammoniakeinsatz in einem rekuperativ betriebenen Wärmetauscher (Feed-Effluent-Wärmetauscher) gegen zumindest einen Teil des Spaltgases überhitzt wird.

Vor der Erläuterung von Ausgestaltungen der vorliegenden Erfindung und deren Vorteilen werden nachfolgend einige bei der Beschreibung der Erfindung verwendete Begriffe näher definiert.

Die vorliegende Anmeldung verwendet zur Charakterisierung von Drücken und Temperaturen die Begriffe "Druckniveau" und "Temperaturniveau", wodurch zum Ausdruck gebracht werden soll, dass entsprechende Drücke und Temperaturen in einer entsprechenden Anlage nicht in Form exakter Druck- bzw. Temperaturwerte verwendet werden müssen. Jedoch bewegen sich derartige Drücke und Temperaturen typischerweise in bestimmten Bereichen, die beispielsweise ± 1%, 5%, 10%, 20% oder 25% um einen Mittelwert liegen. Entsprechende Druckniveaus und Temperaturniveaus können in disjunkten Bereichen liegen oder in Bereichen, die einander überlappen. Dasselbe Druckniveau kann beispielsweise auch noch vorliegen, wenn es zu unvermeidlichen Druckverlusten kommt. Entsprechendes gilt für Temperaturniveaus. Bei den hier in bar angegebenen Druckniveaus handelt es sich um Absolutdrücke.

In der vorliegenden Erfindung wird das Ammoniakgas bei einer Temperatur von nicht mehr als 700°C im Ammoniakcracker umgesetzt und das dabei erhaltene Spaltgas in einem rekuperativ betriebenen Wärmetauscher (Feed-Effluent-Wärmetauscher) gegen den verdampften Ammoniakeinsatz abgekühlt. Wegen der unterhalb von 700°C liegenden Temperatur des Spaltgases, kann ein kostengünstig aus Standardmaterialien gefertigter Feed-Effluent-Wärmetauscher dauerhaft eingesetzt werden. Vorzugsweise liegt die Spalttemperatur bei nicht mehr als 600°C, so dass das Spaltgas mit weniger als 600°C in den Feed-Effliuent-Wärmetauscher eintritt.

Bevorzugt wird der verdampfte Ammoniakeinsatz im Wärmetausch mit dem Spaltgas auf eine Temperatur überhitzt, die um nicht mehr als 50°C unterhalb der Temperatur liegt, mit der das Spaltgas in den Feed-Effluent-Wärmetauscher eintritt.

Um die Wärme des im Feed-Effluent-Wärmetauscher bei der Überhitzung des verdampften Ammoniakeinsatzes abgekühlten Spaltgases zu nutzen, wird vorgeschlagen, das abgekühlte Spaltgas zur Verdampfung des Ammoniakeinsatzes und/oder zur Vorwärmung eines Brennstoffs einzusetzen, der ggf. zur Beheizung des Ammoniakcrackers verbrannt wird.

Durch die Wärmerückgewinnung können Kosten und Ressourcen für die Verdampfung und/oder Überhitzung des gewöhnlich mit -33°C flüssig bereitgestellten Ammoniakeinsatzes eingespart werden.

Um die Ammoniakspaltung bei den erfindungsgemäß vorgeschlagenen niedrigen Temperarturen mit wirtschaftlich sinnvollen Umsätzen durchführen zu können, wird vorgeschlagen, einen eisenbasierten, aus dem Stand der Technik bekannten und für die Ammoniakspaltung geeigneten Katalysator im Ammoniakcracker anzuordnen und das im Feed-Effluent-Wärmetauscher erhaltene überhitzte Ammoniakgas über diesen Katalysator zu führen.

Eisenbasierte Katalysatoren liefern ausreichend hohe Ammoniakumsätze bereits ab einer Spalttemperatur von 400°C. Es wird daher weiter vorgeschlagen, das erfindungsgemäße Verfahren unter Einsatz eines eisenbasierten Katalysators bei einer Spalttemperatur zwischen 400°C und 700°C, vorzugsweise zwischen 400°C und 600°C durchzuführen. Der verdampfte Ammoniakeinsatz kann bei dieser Verfahrensvariante somit auf eine Temperatur zwischen 350°C und ca. 690°C überhitzt werden.

Unabhängig von der Art des eingesetzten Katalysators wird der Ammoniakcracker bevorzugt mit einem Spaltdruck zwischen 1 bis 70 bar, besonders bevorzugt zwischen 20 bis 50 bar betrieben. Ein hoher Spaltdruck wirkt sich zwar negativ auf dem Ammoniakumsatz aus, ist aber sinnvoll, wenn das Wasserstoff enthaltene Produkt mit hohem Druck, beispielsweise als Brenngas für eine Gasturbine, abgegeben werden soll, da der flüssig vorliegende Ammoniakeinsatzes mit geringem Energieaufwand auf den Spaltgasdruck gepumpt werden kann.

Der Einsatz anderer, gegenwärtig bereits auf dem Markt erhältlicher oder noch in Entwicklung befindlicher Katalysatoren soll nicht ausgeschlossen sein. So kann das erfindungsgemäße Verfahren auch unter Verwendung eines Katalysators durchgeführt werden, der auf Nickel- oder einem Bimetall oder einem Element der aus Ruthenium, Rhodium, Palladium, Osmium, Iridium und Platin bestehenden Platingruppe basiert.

Dabei sind auf Eisen oder einem Mitglied der Platingruppe basierende Katalysatoren besonders vorteilhaft, da die Ammoniakspaltung mit diesen Katalysatoren bei niedrigeren Temperaturen durchgeführt werden kann und dem Ammoniakcracker somit weniger Wärme zugeführt werden muss.

Bei eisenbasierten Katalysatoren tritt herkömmlicherweise das Problem auf, dass diese Katalysatoren bei Anwesenheit von Wasser oder Öl leicht oxidieren. Im Handel erhältliches Ammoniak, das flüssig bei -33°C in gewöhnlich aus korrosionsanfälligem Kohlenstoffstahl gefertigten Tanks gelagert wird, ist zur Unterdrückung der Korrosionsmechanismen mit einer geringen Menge Wasser (0,2 bis 0,5 Gew.-%) versetzt und kann daneben auch Öl (< 5 ppmw) enthalten. Für den Fall, dass der flüssige Ammoniakeinsatz Wasser und/oder Öl enthält, sieht eine Ausgestaltung des erfindungsgemäßen Verfahrens, insbesondere bei Verwendung eines eisenbasierten Katalysators, eine Abtrenneinrichtung vor, mit der Wasser und/oder Öl aus dem verdampften Ammoniakeinsatz entfernt werden können. Dabei wird durch die Abtrenneinrichtung ein gegenüber dem verdampften Ammoniakeinsatz an Ammoniak angereichertes und an Wasser und/oder Öl abgereicherter Ammoniakeinsatz und ein gegenüber dem verdampften Ammoniakeinsatz an Ammoniak abgereichertes und an Wasser und/oder Öl angereichertes Tailgas erzeugt.

Die Abtrennung von Wasser und/oder Öl aus dem Ammoniakeinsatz wird bevorzugt durch Druckwechseladsorption in einem Druckwechseladsorber und/oder Temperaturwechseladsorption in einem Temperaturwechseladsorber und/oder mit Hilfe einer Membran durchgeführt. Der oder die Adsorber können dabei mehrere Adsorptionsschichten aufweisen, durch die dem verdampften Ammoniakeinsatz besonders effizient Wasser und/oder Öl entnommen werden können.

Durch das Entfernen von Wasser und/oder Öl aus dem Ammoniakeinsatz kann die Lebensdauer insbesondere von eisenbasierten Katalysatoren deutlich verlängert werden.

In einer bevorzugten Ausführungsform werden ein Teil des abgekühlten Spaltgases und/oder zumindest ein Teil des in der Abtrenneinrichtung erzeugten Tailgases zur Bereitstellung eines Anteils, der dem Ammoniakcracker zugeführten Wärme verfeuert.

In einer weiteren Ausführungsform wird das abgekühlte Spaltgas oder ein Teil des abgekühlten Spaltgases unter Erhalt eines gegenüber dem abgekühlten Spaltgas zumindest an Wasserstoff angereicherten und zumindest an Ammoniak abgereicherten Wassersoff enthaltenen Produkts und eines gegenüber dem abgekühlten Spaltgas zumindest an Wasserstoff abgereicherten und an Ammoniak angereicherten Restgases einer Druckwechseladsorption unterworfen. Die Druckwechseladsorption kann dabei so ausgelegt sein, dass es sich bei dem Wasserstoff enthaltenden Produkt um reinen Wasserstoff handelt. Weiterhin ist es möglich, dass die Druckwechseladsorption so ausgelegt ist, dass als Wasserstoff enthaltendes Produkt ein aus Wasserstoff und Stickstoff bestehendes Formiergas erhalten wird.

Vorzugsweise wird die Ammoniakspaltung ohne Zugabe von Dampf durchgeführt. Auf diese Weise können der Wassergehalt in dem im Ammoniakcracker erhaltenen Spaltgas und der Trennaufwand bei der Erzeugung des Wasserstoff enthaltenden Produkts reduziert werden. Ferner kann auf ein separates Dampfsystem verzichtet werden.

In einer weiteren Ausführungsform wird ein brennerbefeuerter Spaltreaktor in Verbindung mit einem Abhitzesystem eingesetzt, über das Verbrennungsluft und/oder Brennstoff vorgewärmt werden. Möglich ist es aber auch, einen elektrisch beheizten Ammoniakcracker einzusetzen und Verbrennungsluft und/oder Brennstoff nicht oder auf andere Weise vorzuwärmen.

Das Wasserstoff enthaltende Produkt oder ein Teil hiervon kann einer Gasturbine oder einer Brennstoffzelle, insbesondere einer Festoxidbrennstoffzelle (engl.: solid oxide fuel cell, SOFC) zugeführt werden.

Zur Durchführung des erfindungsgemäßen Verfahrens zur Gewinnung eines Wasserstoff enthaltenden Produkts wird eine Vorrichtung vorgeschlagen, die einen Verdampfer zur Verdampfung des flüssig bereitgestellten Ammoniakeinsatzes, einen Überhitzer zur Überhitzung des verdampften Ammoniakeinsatzes sowie einen Spaltreaktor umfasst, in dem der überhitzte Ammoniakeinsatz mit katalytischer Unterstützung zu einem weitgehend aus Ammoniak, Wasserstoff und Stickstoff bestehenden Spaltgas umgesetzt werden kann.

Vorrichtungsseitig wird die gestellte Aufgabe erfindungsgemäß dadurch gelöst, dass der Spaltreaktor mit einer Spalttemperatur von weniger als 700°C betreibbar und der Überhitzer als rekuperativer Wärmetauscher (Feed-Effluent-Wärmetauscher) ausgeführt ist, mit dem der verdampfte Ammoniakeinsatz gegen zumindest einen Teil des im Spaltreaktor erhältlichen Spaltgases überhitzt werden kann.

Zu Vorteilen sowie Ausgestaltungen einer solchen Vorrichtung wird auf die obigen Erläuterungen betreffend das erfindungsgemäß vorgeschlagene Verfahren ausdrücklich verwiesen, da diese hierfür in gleicher Weise gelten.

### Kurze Beschreibung der Zeichnung

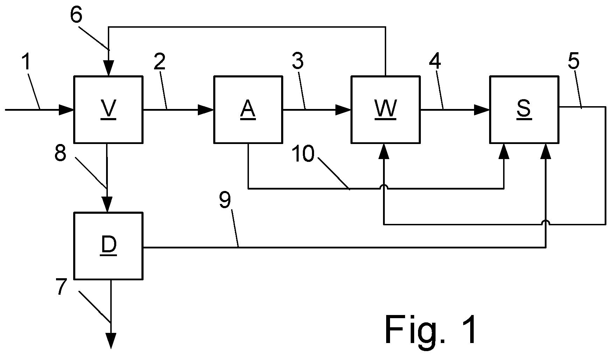

Figur 1 zeigt ein Blockdiagramm einer Anlage, die dazu eingerichtet ist, eine Ausführungsform des erfindungsgemäßen Verfahrens durchzuführen.

Die nachfolgende Beschreibung der Ausführungsform dient dem Zweck, den Leser beim Verständnis der beanspruchten und zuvor erläuterten Merkmale zu unterstützen. Sie behandelt lediglich ein repräsentatives Beispiel, das hinsichtlich der Merkmale der Erfindung nicht abschließend und/oder beschränkend betrachtet werden soll. Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Erfindung, wie er in den Ansprüchen definiert ist, oder als Beschränkungen von Äquivalenten zu den Ansprüchen zu betrachten sind, und dass andere Ausführungsformen verwendet und Änderungen vorgenommen werden können, ohne vom Umfang der beanspruchten Erfindung abzuweichen.

Erläuterungen, die sich auf Vorrichtungen, Apparate, Anordnungen, Systeme usw. gemäß Ausführungsformen der vorliegenden Erfindung beziehen, können auch für Verfahren, Prozesse, Methoden usw. gemäß den Ausführungsformen der vorliegenden Erfindung gelten und umgekehrt.

In der Anlage der Figur 1 wird ein flüssiger, geringe Mengen an Wasser und Öl enthaltender Ammoniakeinsatz 1 ggf. nach einer Druckerhöhung im Verdampfer V verdampft. Aus dem so erhaltenen verdampften Ammoniakeinsatz 2 werden in der Abtrenneinrichtung A beispielswiese durch Druckwechseladsorption Wasser und Öl abgetrennt, um ein an Ammoniak abgereichertes und an Wasser und Öl angereichertes Tailgas 10 sowie einen wasser- und ölfreien verdampften Ammoniakeinsatz 3 zu erhalten, der im Feed-Effluent-Wärmetauscher W auf eine Temperatur von etwas weniger als 600°C überhitzt wird. Im Spaltreaktor S wird der überhitzte Ammoniakeinsatz 4 mit Unterstützung eines auf Eisen basierenden Katalysators und unter Wärmezufuhr zu einem weitgehend aus Wasserstoff, Stickstoff sowie nicht umgesetztem Ammoniak bestehenden Spaltgas 5 umgesetzt, das mit einer Temperatur von ca. 600°C dem Feed-Effluent-Wärmetauscher W zugeführt wird, um den wasser- und ölfreien Ammoniakeinsatz 3 in indirektem Wärmetausch zu überhitzen. Anschließend wird das bei der Überhitzung abgekühlte Spaltgas 6 zum Verdampfer V weitergeleitet, wo es weitere Wärme bei der Verdampfung des flüssigen Ammoniakeinsatzes 1 abgibt. Zur Gewinnung eines Wasserstoff enthaltenen Produkts 7 wird das derart abgekühlte Spaltgas 8 im Druckwechseladsorber D weiterbehandelt, wobei ein ammoniakhaltiges Restgas 9 anfällt, das gemeinsam mit dem Tailgas 10 im Spaltreaktor S verbrannt wird, um Wärme für die Ammoniakspaltung zu erhalten. Alternativ ist auch die Verwendung des Restgases 9 oder des Tailgases 10 zur Beheizung eines externen Ofens (nicht dargestellt) möglich.

## Patentansprüche

1. Verfahren zur Gewinnung eines Wasserstoff enthaltenden Produkts (7), bei dem ein flüssig bereitgestellter Ammoniakeinsatz (1) verdampft und überhitzt wird, um einen überhitzten Ammoniakeinsatz (4) zu erhalten, der in einem Spaltreaktor (S) mit katalytischer Unterstützung zu einem weitgehend aus Ammoniak, Wasserstoff und Stickstoff bestehenden Spaltgas (5) umgesetzt wird, das nach seiner Abkühlung zu dem Wasserstoff enthaltenden Produkt (7) aufbereitet wird, **dadurch gekennzeichnet, dass** die Ammoniakspaltung bei einer Temperatur von weniger als 700°C durchgeführt und der verdampfte Ammoniakeinsatz (3) in einem rekuperativ betriebenen Wärmetauscher (Feed-Effluent-Wärmetauscher) (W) gegen zumindest einen Teil des Spaltgases (5) überhitzt wird.

2. Verfahren nach Anspruch 1, **dadurch gekennzeichnet, dass** Ammoniak im Spaltreaktor (S) mit Unterstützung eines Katalysators gespalten wird, der auf Eisen und/oder Nickel und/oder einem Element der Platingruppe und/oder einem Bimetall basiert.

3. Verfahren nach einem der Ansprüche 1 oder 2, **dadurch gekennzeichnet, dass** die Ammoniakspaltung bei einer Temperatur zwischen 400°C und 600°C durchgeführt wird.

4. Verfahren nach einem der Ansprüche 1 bis 3, **dadurch gekennzeichnet, dass** der verdampfte Ammoniakeinsatz (3) im Feed-Effluent-Wärmetauscher (W) auf eine Temperatur überhitzt wird, die um nicht mehr als 50°C unterhalb der Temperatur liegt, mit der das Spaltgas (5) in den Feed-Effluent-Wärmetauscher (W) eintritt.

5. Verfahren nach einem der Ansprüche 1 bis 4, **dadurch gekennzeichnet, dass** das im Feed-Effluent-Wärmetauschers (W) abgekühlte Spaltgas (6) zur Verdampfung des flüssigen Ammoniakeinsatzes (1) und/oder zur Anwärmung von Brennstoff eingesetzt wird, der verbrannt wird, um Wärme für die endotherme Ammoniakspaltung zu liefern.

6. Verfahren nach einem der Ansprüche 1 bis 5, **dadurch gekennzeichnet, dass** Wasser und/oder Öl unter Erhalt eines an Ammoniak abgereicherten und an Wasser und/oder Öl angereicherten Tailgases (10) aus dem verdampften Ammoniakeinsatz (2) abgetrennt werden.

7. Verfahren nach Anspruch 6, **dadurch gekennzeichnet, dass** zumindest ein Teil des Tailgas (10) zur Bereitstellung von Wärme für die Ammoniakspaltung verfeuert wird.

8. Verfahren nach einem der Ansprüche 1 bis 7, **dadurch gekennzeichnet, dass** der Spaltreaktor (S) mit einem Spaltdruck betrieben wird, der zwischen 1 bar und 70 bar, vorzugsweise zwischen 20 bar und 50 bar liegt.

9. Anlage zur Gewinnung eines Wasserstoff enthaltenden Produkts (7) aus einem flüssig bereitgestellten Ammoniakeinsatz (1), umfassend einen Verdampfer (V) zur Verdampfung des flüssigen Ammoniakeinsatzes (1), einen Überhitzer (W) zur Überhitzung des verdampften Ammoniakeinsatzes (3) sowie einen Spaltreaktor (S), in dem der überhitzte Ammoniakeinsatz (4) mit katalytischer Unterstützung zu einem weitgehend aus Ammoniak, Wasserstoff und Stickstoff bestehenden Spaltgas (5) umgesetzt werden kann, **dadurch gekennzeichnet, dass** der Spaltreaktor (S) mit einer Spalttemperatur von weniger als 700°C betreibbar und der Überhitzer (W) als rekuperativer Wärmetauscher (Feed-Effluent-Wärmetauscher) ausgeführt ist, mit dem der verdampfte Ammoniakeinsatz (3) gegen zumindest einen Teil des im Spaltreaktor (S) erhältlichen Spaltgases (5) überhitzt werden kann.

10. Anlage nach Anspruch 9, die zur Durchführung des Verfahrens nach einem der Ansprüche 1 bis 8 eingerichtet ist.
